# EUROPEAN PATENT APPLICATION

(11) **EP 1 715 538 A1**
(43) Date of publication of application: **25.10.2006**
(21) Application number: 05008535.6
(22) Date of filing: 19.04.2005
(51) Int. Cl.: H01M 4/86, H01M 8/08, H01M 8/02

(54) **Novel materials for alkaline fuel cells**

(71) Applicant: Abson, Nicholas M., 24510 Ste Alvere (FR); Middleton, Peter Hugh, 4876 Grimstad (NO)
(72) Inventor: Abson, Nicholas M., 24510 Ste Alvere (FR); Middleton, Peter Hugh, 4876 Grimstad (NO)

(57) **Abstract**

This invention describes the use of conducting porous graphite foam materials as electrodes, catalyst supports, gas diffusion layers and other components in alkaline (AFC) fuel cells and others such as the proton exchange membrane (PEM) fuel cell. The porous open structure of the graphite material is ideally suited to vapour deposition of catalyst materials. Porous graphite foams can be made by the pyrolysis of pitch at high temperatures. Alternatively they can be made by the pyrolysis of certain polymer compounds which can create a foam structure during the curing process. Although the exact microstructure of the final graphite foam depends on many factors, they all possess key physical properties which are relevant to the invention described here such as high thermal conductivity and high electrical conductivity. The foam can also be used in its powdered form as a conductive additive to gas diffusion layers, electrodes and bi-polar plates.

## Description

This invention describes the use of porous conducting graphite foam monoliths (sheets) as components in the construction of alkaline fuel cells. The key components of the fuel cell are described first followed by a description of the Invention and examples of its use in the alkaline fuel cell.

Fuel cells are electrochemical devices which convert chemical energy into electrical energy by means of an electrochemical reaction between the fuel and an oxidant such as air or pure oxygen. In a typical fuel cell, hydrogen is often used as fuel and air is used as the oxidant and both are supplied to the fuel cell as gases fed from storage reservoirs. In order for the electrochemical reactions to take place several key components are required. A single electrochemical cell comprises of two electrodes, namely the anode and the cathode, and an electrolyte separating them. The anode forms the negative electrode and provides the surface on which the fuel (hydrogen) reacts. The cathode forms the positive electrode and provides the surface on which the oxidant (air) reacts. Generally a catalyst is required to accelerate the electrochemical reactions at both the anode and cathode. The electrolyte is the medium through which the ionic species generated by the electrochemical reactions at the electrodes are transported from one electrode to the other. This flux (current) of ions is exactly equivalent to the flux (current) of electrons produced by the cell at the terminals. The electrolyte may be either a liquid or a solid. In the case of the alkaline fuel cell, the electrolyte is a strong aqueous solution of potassium hydroxide. In the case of the proton exchange membrane fuel cells (PEM) the electrolyte is a solid polymer. However in both cases the electrolyte contains dissolved water. A working fuel cell consists of a stack of single cells connected together electrically. The type of connection depends upon the design. There are two basic concepts -mono-polar and bi-polar. In the former case the cells are connected externally to the stack, while in the second case (bi-polar design) the cells are connected internally using bi-polar interconnecting plates. The alkaline fuel cell systems have historically developed along the mono-polar route, but in this invention we are concerned principally with novel bi-polar designs.

In the fuel cell, the fuel (hydrogen) is supplied to the anode through a porous interface material called the gas diffusion layer (GDL). This layer is an integral part of the anode-electrode assembly and allows the gas to reach the active layer containing the catalyst where it reacts. Similarly, the air or oxidant is supplied to the cathode through a cathode gas diffusion layer.

The electrode assembly is made of three basic components:

The first component is the gas diffusion layer (GDL). This has the function of allowing the fuel gas (hydrogen) or oxidant (air) to diffuse from its supply chamber to the catalyst surface where it absorbs, exchanges electrons and reacts. In a bi-polar design the gases are fed through channels incorporated in the surface of the bi-polar plate, so the plate acts both as a gas distribution system and an electrical interconnect between cells. One side of the bi-polar plate supplies the fuel (hydrogen) while the other side of the plate supplies the air (oxidant). The gas diffusion layers are bonded to each side of the bi-polar plate, one comprising the anode the other comprising the cathode.

The gas diffusion layer (GDL) is normally made from a water repellent (hydrophobic) porous material. The purpose of making the gas diffusion layer water repellent is to prevent flooding of the electrode by water contained in the electrolyte, and especially water produced by the electrochemical reaction. In the case of the alkaline fuel cell, water is produced at the anode as a result of the reaction of the supplied hydrogen with the hydroxide ions contained in the electrolyte.

In the case of alkaline fuel cells of the mono-polar design, the gas diffusion layer can be made entirely out of a water repellent plastic cloth such as PTFE or Teflon, or alternatively a mixture of PTFE powder and a pore-former such as ammonium bicarbonate.

In fuel cells of the bi-polar design, it is necessary for the gas diffusion layer to be made electronically conducting. This can be achieved by adding carbon or better still graphite to the PTFE /pore-former mix. The invention provides a novel way to make the gas diffusion layer.

The second component of the electrode assembly is the active layer (AL). This is normally a layer of material containing a catalyst, such as platinum supported on active carbon, and is usually applied or bonded to the side of the gas diffusion layer facing the electrolyte chamber. The active layer can be made by mixing the catalyst with PTFE and a pore former such as ammonium bicarbonate. It is necessary to impart electronic conductivity in the active layer as electrons are required in the electrochemical reactions talking place on the catalyst surfaces. The invention provides a novel way to make the active layer.

In the case of the alkaline fuel cell the active layer is normally applied or bonded directly onto the gas diffusion electrode. In order for the catalyst to function effectively it is very important that it is in intimate contact with the electrolyte, and simultaneously in contact with the reactant gas (hydrogen on the anode and oxygen on the cathode). In order to achieve this three phase contact zone, it is very important to prevent flooding of the electrode assembly with water. This is the reason for using water repellent materials in the construction of the gas diffusion layer.

The third component of the electrode assemble is the current collector. In the case of the alkaline fuel cell, it is common to use nickel mesh as a current collector. In mono-polar designs this is usually imbedded in the active layer, thus providing support for the electrode assembly as well as serving as the current collector.

The traditional methods for fabricating the electrode assembly use calendaring and rolling techniques combined with hot pressing and sintering. The invention provides a simpler and cheaper approach to cell fabrication.

### The invention

We describe here the use of porous graphite foam monoliths (sheets) as components in the alkaline fuel cell. Such components offer distinct advantages over conventional components in alkaline and other fuel cells.

This invention describes the use of conducting porous graphite foam materials as electrodes, catalyst supports, gas diffusion layers and other components in alkaline and other fuel cells. The porous open structure of the graphite material is ideally suited to vapour deposition of catalyst materials. Porous graphite foams can be made by the pyrolysis of pitch at high temperatures as described in several patents. Alternatively they can be made by the pyrolysis of certain polymer compounds which can create a foam structure during the curing process. Graphitization takes place at a very high temperature in the region of 2500 deg C. Although the exact microstructure of the final graphite foam depends on many factors, they all possess key physical properties which are relevant to the invention described here. These properties can be listed as follows: high thermal conductivity, high electrical conductivity, low mass (density), high porosity, good mechanical strength, good corrosion resistance, good thermal shock resistance, high surface area, low thermal expansion coefficient, mechanical flexibility, mechanical compliance easy of fabrication, ease of cutting, ease of machining, ease of handling etc.

Given these properties, porous graphite foam can be used to make electrodes for the alkaline fuel cell and other fuel cells such as the proton exchange membrane fuel cell (PEM). In addition they can also be used in their powdered form as conductive additives to the gas diffusion layer, the active layer and bi-polar plates. The following examples illustrate the use of porous graphite foam monoliths.

### Example 1 Making a catalytic electrode

In this example a block of porous graphite foam is cut by conventional means into a thin sheet of thickness of 1mm or less. The area of the sheet is similar to that of the overall dimension of the completed electrode assembly. The sheet is cut as thin as possible so that it retains enough strength to be handled in the next stage of the assembly.

The sheet is then made into an electrode by coating the surfaces of the foam with a layer of catalytic material. In particular the method of vapour deposition can be used to apply layers of metal and other materials as catalysts. Metals have the advantage of being readily vaporised, either by high temperature evaporation or vacuum assisted evaporation. Other methods such as sputtering can also be used to deposit the metal catalyst. In a variation of the method non-metallic catalysts can also be applied by vapour deposition methods such as chemical vapour deposition and electrostatic assisted vapour deposition.

### Example 2 Making a gas diffusion layer

In this example a block of porous graphite foam is cut by conventional means into a thin sheet of thickness of 1mm or less. The area of the sheet is similar to that of the overall dimension of the completed electrode assembly. The sheet is cut as thin as possible so that it retains enough strength to be handled in the next stage of the assembly.

The sheet is then impregnated with a thin hydrophilic layer of a substance such as PTFE using a variety of techniques including dip coating from a liquid suspension, wet spraying, electrostatic spraying, doctor-blading, screen printing, pad printing, vapour deposition, vacuum deposition and any other coating technique that is commonly used to apply PTFE and similar plastic materials to a substrate. The waterproofed graphite sheet is then ready to be bonded to the active layer.

### Example 3 Making an active anode layer using traditional catalysts

In this example a block of porous graphite foam is cut by conventional means into a thin sheet of thickness of 1 mm or less. The area of the sheet is similar to that of the overall dimension of the completed electrode assembly. The sheet is cut as thin as possible so that it retains enough strength to be handled in the next stage of the assembly.

The sheet is then impregnated with the active anode catalyst. Traditionally platinum, supported on high surface area carbon, is used as the anode catalyst. In this case such a catalyst can be applied using a variety of techniques including dip coating from a liquid suspension, wet spraying, electrostatic spraying, doctor-blading, screen printing, pad printing, vapour deposition, vacuum deposition and any other coating technique that is commonly used to coat a substrate. The active layer is ready to be bonded to the gas diffusion layer.

### Example 4 Making an active cathode layer using traditional catalysts

In this example a block of porous graphite foam is cut by conventional means into a thin sheet of thickness of 1 mm or less. The area of the sheet is similar to that of the overall dimension of the completed electrode assembly. The sheet is cut as thin as possible so that it retains enough strength to be handled in the next stage of the assembly.

The sheet is then impregnated with the active cathode catalyst. Traditionally platinum, supported on high surface area carbon, is used as the cathode catalyst. In this case such a catalyst can be applied using a variety of techniques including dip coating from a liquid suspension, wet spraying, electrostatic spraying, doctor-blading, screen printing, pad printing, vapour deposition, vacuum deposition and any other coating technique that is commonly used to coat a substrate. The active layer is ready to be bonded to the gas diffusion layer.

### Example 5 Making an active anode layer using novel catalysts

In this example a block of porous graphite foam is cut by conventional means into a thin sheet of thickness of 1mm or less. The area of the sheet is similar to that of the overall dimension of the completed electrode assembly. The sheet is cut as thin as possible so that it retains enough strength to be handled in the next stage of the assembly.

The sheet is then impregnated with the active anode catalyst. In this example we use a novel catalyst which does not contain any platinum. Examples of alternative anode catalysts include nickel, Raney nickel, borides and perovskite oxides In this case such a catalyst can be applied using a variety of techniques including electrochemical deposition, electroless deposition, dip coating from a liquid suspension, wet spraying, electrostatic spraying, doctor-blading, screen printing, pad printing, vapour deposition, vacuum deposition and any other coating technique that is commonly used to coat a substrate. The active layer is ready to be bonded to the gas diffusion layer.

### Example 6 Making an active cathode layer using novel catalysts

In this example a block of porous graphite foam is cut by conventional means into a thin sheet of thickness of 1 mm or less. The area of the sheet is similar to that of the overall dimension of the completed electrode assembly. The sheet is cut as thin as possible so that it retains enough strength to be handled in the next stage of the assembly.

The sheet is then impregnated with the active cathode catalyst. In this example we use a novel catalyst which does not contain any platinum. Examples of alternative cathode catalysts include metallic silver, borides and perovskite oxides. In this case such a catalyst can be applied using a variety of techniques including electrochemical deposition, electroless deposition, dip coating from a liquid suspension, wet spraying, electrostatic spraying, doctor-blading, screen printing, pad printing, vapour deposition, vacuum deposition and any other coating technique that is commonly used to coat a substrate. The active layer is ready to be bonded to the gas diffusion layer.

### Example 7 Making a combined gas diffusion layer and active anode layer

In this example a single sheet of porous graphite foam is used to make both the gas diffusion electrode and the active layer. This can be done by taking a sheet of porous graphite foam as explained in example 1. However, in this case the foam is first made hydrophobic by the PTFE treatment described in example 2, followed by impregnation of one side of the gas diffusion layer with the active catalyst. The method used to apply the catalyst is the same as those described in examples 3-6.

### Example 8 Making a graded gas diffusion layer

In this example the fabrication process used to make the porous graphite foam is modified to provide a sheet of porous graphite foam with a graded porosity. On one side of the sheet there are coarse pores while on the other side of the sheet there are fine pores. In between the two sides, the porosity varies from coarse to fine. In operation, the coarse side of the sheet faces the bi-polar plate and the gas side of the fuel cell, while the fine side of the sheet faces the electrolyte side of the fuel cell. In order for this system to function it is necessary to impart hydrophobic properties to the coarse side by impregnating the foam with PTFE or some other hydrophobic agent. On the fine side of the foam it is necessary to incorporate the catalyst. This can be done using coating techniques as described in examples 3-6. In a variation of this application, the geometry is reversed and the coarse side of the foam is impregnated with the catalyst and faces the electrolyte side of fuel cell while the fine side of the foam is made hydrophobic and faces the gas side of the fuel cell. The graded gas diffusion layer can be used on both the anode and the cathode sides of the fuel cell.

### Example 9 Making a complete anode assembly with a conventional gas diffusion layer

In this example the anode active layer as described in examples 3 and 5 is bonded to a conventional gas diffusion layer using calendaring and rolling techniques. In this case the gas diffusion layer is made from a stiff paste as described in other patents, which is first rolled into a thin sheet less than 1 mm thick using a calendaring machine. The anode active layer as described in examples 3 and 5 is then pressed onto one side of the rolled gas diffusion layer using applied pressure. This can be achieved by squeezing the two layers together in a calendaring machine, or alternatively squeezing the two layers together in a hydraulic uni-axial press, or a hydrostatic press. It is normally necessary to apply heat to this kind of gas diffusion layer to create the necessary porosity in the structure. To do this the pressed assembly is then heated in an oven to the desired temperature and duration. It may be necessary to purge the oven with an inert gas to avoid oxidation of the anode catalyst.

### Example 10 Making a compete cathode assembly with a conventional gas diffusion layer

In this example the cathode active layer as described in examples 4 and 6 is bonded to a conventional gas diffusion layer using calendaring and rolling techniques. In this case the gas diffusion layer is made from a stiff paste as described in other patents, which is first rolled into a thin sheet less than 1 mm thick using a calendaring machine. The cathode active layer as described in examples 4 and 6 is then pressed onto one side of the rolled gas diffusion layer using applied pressure. This can be achieved by squeezing the two layers together in a calendaring machine, or alternatively squeezing the two layers together in a hydraulic uni-axial press, or a hydrostatic press. It is normally necessary to apply heat to this kind of gas diffusion layer to create the necessary porosity in the structure. To do this the pressed assembly is then heated in an oven to the desired temperature and duration. It may be necessary to purge the oven with an inert gas to avoid oxidation of the cathode catalyst.

### Example 11 Making a gas diffusion layer and active layer assembly using a plurality of porous graphite foam tiles (window frame)

In this example the gas diffusion layer is made up of smaller sub-units of porous graphite foam tiles which are assembled in a window frame made from a conducting plastic or polymer. The porous graphite foam tiles are cut in exactly the same manner as described in examples 2-6, the only difference is the size. The idea behind this application is to make much larger area electrodes from smaller stock sizes of porous graphite foam. This has the advantage of minimising the risk of breakage or damage of the graphite components and enabling much thinner sheets of graphite to be used. The window frame can be made by injection moulding methods using a conducting plastic or polymer. Alternatively other methods for making the window frame can be used. A suitable plastic material can be made by mixing graphite powder, such as the waste powder produced from cutting the porous graphite foam, with a thermosetting plastic. A suitable fabrication process for bonding the foam tile into the window frame is injection moulding. One key property of this type of electrode assembly is increased mechanical strength compared with an electrode made from a single sheet of porous graphite foam.

### Example 12 Incorporating a gas diffusion layer/active layer electrode assembly into a sub-frame

In order to use the gas diffusion layer/active layer electrode assembly in the fuel cell it is necessary to attach it to a sub-frame which acts as a housing for the electrode. The sub-frame is designed in such a way to provide gas and electrolyte feed channels, cooling channels (if required), sealing surfaces and locating fixtures. The sub-frame unit then becomes one of the basic repeat elements for constructing the stack. Other repeat elements containing the bi-polar plate are made in a similar fashion. One way to make the sub-frame is similar to that described in example 11. This employs the technique of injection moulding. This requires a thermosetting plastic material to be moulded around the electrode assembly which is inserted directly into the mould before injection. This provides a simple one step method for bonding the electrode and at the same time making a good edge seal around the periphery of the electrode. The use of porous graphite foams to make the electrode assemblies greatly improves this type of fabrication process as no metal mesh is required and the solid foam provide mechanical stability.

### Example 13 Supporting the gas diffusion layer and active layers with degradable backing films

In this example the thin layers of porous graphite foams can be more easily handled by bonding them to a backing film of degradable material such as rice paper or thermo-degradable gel. This intermediate step in the construction of the electrode assembly can minimise the risk of breakage or damage and allow larger electrode assemblies to be manufactured.

## Claims

1. Porous graphite foams have sufficient mechanical strength to make self supporting electrode assemblies which do not require the use of nickel mesh or other metallic support materials. The high strength means that there is less risk of mechanical breakdown during service life.

2. Porous graphite foams have sufficient electrical conductivity to make the use of nickel mesh or other metallic current collectors unnecessary. Moreover, graphite has a higher electronic conductivity than the non-graphitic forms of carbon. This means that fuel cell components using graphite instead of carbon can have lower electrical resistances. This will enable stacks to be manufactured with lower Ohmic losses and therefore operate with higher electrical efficiencies.

3. Porous graphite foams have sufficient thermal conductivity to simplify and improve the heat management in fuel cells and to provide a more uniform heat distribution over the active area of the electrode. This in turn means that there is less risk of thermal hot spots being generated under operating conditions, which means that less degradation will take place in the fuel cell and consequently increase lifetime, durability and reliability. Moreover this means that the cell can be run at higher current densities.

4. Porous graphite foams have a much lower thermal expansion coefficient than metals such as nickel. By replacing the metal with the graphite foam means that less stress will be built up inside the cell during operation, especially during thermal cycling. This in turn will reduce the risk of plate warping and degradation due to thermal expansion.

5. Porous graphite foams have very low creep rates which means that the electrode assemblies will be dimensionally stable over very long periods of time. This will lead to prolonged lifetime of operation with lower degradation rates.

6. Porous graphite foams are corrosion resistant towards the aggressive alkali used in the electrolyte. This means that there will be less decomposition of the electrode assemblies that would otherwise have existed with carbon paste gas diffusion layers and carbon paste active layers. It is well known that carbon electrodes can disintegrate with time under such aggressive conditions. The use of graphite instead of carbon will greatly reduce this disintegration phenomenon.

7. Electrode assemblies made with porous graphite foams are electrically conducting throughout and thus can be used in a bi-polar fuel cell stack. This is a major advantage over conventional alkaline electrode assemblies which generally have an insulating gas diffusion layer rendering the bi-polar systems inappropriate.

8. The use of porous graphite foam in the construction of electrode assemblies simplifies the overall construction of the fuel cell, requiring fewer steps and shorter fabrication times. This in turn leads to cost saving and cheaper fuel cells.

9. The cost of fabricating the porous graphite foam is less than other carbon preparation routes and coupled with ease of machinability and general shaping imparts a cost saving to the fabrication of fuel cells incorporating the porous graphite foam.

10. Porous graphite foams are not completely rigid, but do possess a degree of flexibility which enables some bending to occur in service. Likewise the same material is also relatively soft which means that it is slightly compressible. These two properties provide a degree of compliance which allows the material to make very good electrical, thermal and mechanical contact with adjacent components in the stack. This means that when the stack elements are compressed together the contact area between the foam components is maximized.

11. The porous graphite foam can also be used in the fuel cell in its powder form. One convenient source of this powder is the left over waste material from the sheet and tile cutting process. Using this powder maximizes the cost effectiveness of the overall graphite manufacturing process. At the same time the graphite powder will impart preferential properties to the fuel cell application, especially improved electronic and mechanical properties.

12. The idea of using graphite can be extended to include graphitized carbon cloth or graphitized carbon paper. This is relevant to any fuel cell type which uses carbon cloth or carbon paper as the main component of the gas diffusion layer and active layer. Such fuel cells include specifically the alkaline fuel cell, the PEM fuel cell and the direct methanol fuel cell. Graphitizing the carbon cloth of carbon paper will increase the electronic conductivity and the corrosion resistance / degradation. This latter aspect particularly relates to the problem of electrode disintegration under high current densities and in also oxidation by air and peroxides.

13. The graphitized foam can easily be coated with a catalyst and other layers by any of the methods normally used to coat a substrate. These methods include vacuum deposition, sputtering deposition and evaporation deposition at an elevated temperature above the melting point of the coating material. Other methods include chemical vapour deposition, electrostatically assisted chemical vapour deposition, electroplating, electroless deposition, dip coating from a liquid suspension, wet spraying, electrostatic spraying, doctor-blading, screen printing, pad printing and other coating methods.
